Europäisches Patentamt

(19) European Patent Office

Office européen des brevets

(11) Publication number: **0 152 685**
A1

# (12) EUROPEAN PATENT APPLICATION

(21) Application number: **84308290.0**

(22) Date of filing: **29.11.84**

(51) Int. Cl.⁴: **C 05 F 11/00**

(30) Priority: **30.11.83 GB 8331930**
**20.01.84 GB 8401519**
**21.03.84 GB 8407298**

(43) Date of publication of application: **28.08.85**
**Bulletin 85/35**

(84) Designated Contracting States: **AT BE CH DE FR IT LI LU NL SE**

(71) Applicant: **CLEARFIELD N.V., Schottegatweg Oost 130, Salinja Curacao Dutch Antilles (NL)**

(72) Inventor: **Kinahan, Edward Anthony Francis, Weatherside, Hound Corner Hamble Lane, Netley Abbey Southampton S03 5FT (GB)**

(74) Representative: **Crampton, Keith John Allen et al, D YOUNG & CO 10 Staple Inn, London WC1V 7RD (GB)**

(54) Fertilizer.

㉝ An organic fertilizer is produced by adding biomix to seaweed, which is preferably in artificially dried particulate form, e.g. milled or granular dry seaweed, and autoclaving the resulting mixture, preferably with agitation, at a temperature of at least 80°C and a pressure of 50 to 100 psig (446 to 791 kPa) for a suitable period, typically 4 to 6 hours, followed by cooling, preferably with the agitation being continued during at least part of the cooling step. The mixture is then allowed to settle, preferably after being expelled, e.g. by compressed air, into a settling tank, and the supernatant liquid product is removed, e.g. by decantation, and may be filtered if necessary and if desired dehydrated to produce a concentrate.

## FERTILIZER

This invention relates to fertilizers containing seaweed. Such fertilizers, which are well known, contain not only the principal plant nutrients nitrogen, phosphorus and potash (NPK) but also valuable trace elements such as boron, sulphur, cobalt, copper, iron, magnesium, manganese, molybdenum, sodium, zinc and the halogens chlorine, bromine and iodine. However, having regard to the needs of plants, provision of required amounts of NPK will give unnecessarily large amounts of the trace elements. Seaweed fertilizers can be augmented with inorganic sources of NPK, but this makes them of no appeal to the growing numbers of organic gardeners, horticulturalists and farmers.

The anaerobic digestion of organic materials of vegetable and animal origin, particularly the droppings of horses, cattle and poultry, results in the production of a fluid that is rich in assimilable NPK, as well as being substantially odourless. This fluid is known in the art and referred to herein as "biomix".

In accordance with the present invention, an organic fertilizer is produced by adding biomix to seaweed, which is preferably in artificially dried particulate form, e.g. milled or granular dry seaweed, and autoclaving the resulting mixture, preferably with agitation, at a temperature of at least 80 °C and a pressure of 50 to 100 psig (446 to 791 kPa) for a suitable period, typically 4 to 6 hours, followed by cooling, preferably with the agitation being continued during at least part of the cooling step. The mixture is then allowed to settle, preferably after being expelled, e.g. by compressed air, into a settling tank, and the supernatant liquid product is removed, e.g. by decantation, and may be filtered if necessary.

The milled dried seaweed may previously have been saturated with water by soaking for up to 12 hours, and then crushed, e.g. between rollers, to form a pulp.

The volume of biomix is preferably 4 to 8 (e.g. about 6) times the volume of dried seaweed. If seaweed pulp is used, this will itself have about 3 times the volume of the dried seaweed that it has been prepared from. Before autoclaving, the mixture of biomix and seaweed may be allowed to stand for from 2 to 12 hours, to facilitate extraction of nutrients with the liquid and hence reduction of the time and energy expended in autoclaving. The period of standing must not be long enough to allow any degradation of the material. The preferred autoclave pressure is 70 to 90, e.g. about 80, psig (584 to 722, e.g. about 653, kPa) and the preferred temperature 90 to 105 °C.

The product obtained by the process of the present invention is a liquid containing all crop nutrients required by plants. It is completely organic and can be applied to agricultural, horticultural, orchard, garden and greenhouse plants as a foliar spray or soil fertilizer, or in hydroponic culture. The product can if desired be dehydrated to facilitate transport, being readily rehydrated by addition of water.

## CLAIMS

1. A method of producing an organic fertilizer comprising adding biomix, viz. the fluid obtained by anaerobic digestion of organic materials of vegetable and animal origin, to seaweed, autoclaving the resulting mixture at a temperature of at least 80 °C and a pressure of from 446 to 791 kPa for a suitable period, cooling the mixture, allowing it to settle, and removing the supernatant liquid as the desired product.

2. A method as claimed in Claim 1 in which the seaweed is in artificially dried particulate form.

3. A method as claimed in Claim 2 in which the dried seaweed has been saturated with water by soaking for up to 12 hours and then crushed to a pulp, and the biomix is added to the pulp.

4. A method as claimed in any preceding claim in which 4 to 8 volumes of biomix is used per volume of dried seaweed.

5. A method as claimed in any preceding claim in which the mixture is agitated during autoclaving and at least part of the cooling step.

6. A method as claimed in any preceding claim in which the autoclaving takes place over 4 to 6 hours.

7. A method as claimed in any preceding claim in which the product is filtered.

8. A method as claimed in any preceding claim in which the mixture of biomix and seaweed is allowed to stand for from 2 to 12 hours before autoclaving, to facilitate extraction of nutrients.

9. A method as claimed in any preceding claim in which the autoclave pressure is 584 to 722 kPa and the temperature 90 to 105 °C.

0152685

10.    A method as claimed in any preceding claim including the further step of dehydrating the product to produce a rehydratable concentrated fertilizer.

11.    An organic fertilizer obtained by a method as claimed in any preceding claim.

0152685
Application number

# European Patent Office

# EUROPEAN SEARCH REPORT

EP 84 30 8290

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A- 664 989 (PLANT PROD. LTD.) <br> * Claims * | 1 | C 05 F 11/00 |
| A | GB-A-2 031 258 (J.D. WRIGHT & CY.) <br> * Whole document * | 1 | |
| A | CHEMICAL ABSTRACTS, vol. 62, 1965, column 15379d, Columbus, Ohio, US; K.M. RAMANATHAN et al.: "Composting of seaweeds" & MADRAS AGR. J. 51(11), 451-457(1964) | | |
| A | DE-A-1 592 577 (BÖTTGER) <br> * Whole document * | 1,2 | |
| | | | TECHNICAL FIELDS SEARCHED (Int. Cl.4) |
| A | DE-A-2 354 270 (A. HÖHN) <br> * Page 3, line 20 - page 4, line 8 * | 1 | C 05 F <br> C 05 G |
| A | US-A-4 336 051 (J.U. MARQUEZ) | | |
| A | DE-A-1 008 758 (APPLIC. BIOLOGIQUES) | | |
| P,X | GB-A-2 129 785 (A. COOKE) <br> * Page 1, lines 49-74 * | 1-11 | |

The present search report has been drawn up for all claims

| Place of search | Date of completion of the search | Examiner |
|---|---|---|
| THE HAGUE | 24-05-1985 | VERHOEST J.P.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82